# EUROPEAN PATENT SPECIFICATION

(11) **EP 1 275 097 B1**
(45) Date of publication and mention of the grant of the patent: **17.03.2010**
(21) Application number: 01918094.2
(22) Date of filing: 29.03.2001
(51) Int. Cl.: G09B 17/04, G06F 17/30

(54) **AN ARRANGEMENT AND A METHOD FOR COMMUNICATION VIA A NETWORK**
ANORDNUNG UND VERFAHREN ZUR KOMMUNIKATION ÜBER EIN NETZWERK
DISPOSITIF ET PROCEDE DE COMMUNICATION PAR UN RESEAU

(30) Priority: 29.03.2000 SE 0001116; 20.04.2000 SE 0001479
(43) Date of publication of application: 15.01.2003
(73) Proprietor: Dalström, Tomas, 113 48 Stockholm (SE)
(72) Inventor: Dalström, Tomas, 113 48 Stockholm (SE)
(74) Representative: Berglund, Stefan
(86) International application number: PCT/SE2001/000688
(87) International publication number: WO 2001/073727

(56) References cited:
- WO-A1-00/39776
- US-A- 3 878 327

## Description

### THE BACKGROUND OF THE INVENTION AND PRIOR ART

The invention refers to an arrangement for communication according to the preamble of claim 1, see WO 97/09704. The invention also refers to a method for communication via a network.

One such first unit may for instance be a computer or a computer application, which provides a web page on Internet. The second unit may be a computer, by means of which a receiver visits this web page.

Internet becomes an ever growing and deeper significance as an information carrier in the society. Via different www-addresses, which to a large extent are owned by commercial and non-profit organisations and other interested parties, a plurality of information of different kinds are provided. These information suppliers have a need of being able to communicate with the visitors of the www-address. It is also important for these information suppliers to be able to measure any form of result of their different information and marketing efforts on Internet in the same way as it is desirable to be able to measure the effects of advertising, TV-advertisement, direct advertisement, participation at fairs etc.

It is already today partly possible to see how many visitors are visiting a web page and which web pages a visitor visits Thereby, http state management mechanisms, so-called cookies, are usable. However, the techniques, which are available today, does not give any knowledge about and how the visitors have understood the information which the home page wants to transfer, i.e. if a visitor has read the information provided.

WO97/09704 discloses an arrangement for presenting textual and/or graphical information for reading in a computing environment, which enables a user thereof to increase their reading speed and maintain or improve the comprehension.

US-A-3,878,327 suggests a device for controlling the reading of a text on the display of a TV-receiver including an input connection for receiving an input signal via an antenna or a video recorder. The TV-receiver is modified in such a way that a raster is applied over the picture. The raster includes a small window which is open and in which a part of the text is fully visible for the person reading the text from the display. The window may then be moved over the display in order to control the reading of the text.

### SUMMARY OF THE INVENTION

The object of the present invention is to remedy the problems mentioned above and to provide an arrangement, which makes it possible to measure if the information provided has been understood by a receiver.

This object is obtained by the arrangement initially defined, which is characterised by the features of the characterising portion of claim 1. In such a way, possibilities are created for following up and evaluate the receiving of the information which is provided via Internet.

According to an embodiment of the invention, said parameter includes how large part of the document has been displayed when the displaying is interrupted. Hence a definite knowledge, about which parts of the document which has not been read and a good indication about which parts of the document which the receiver has read, is obtained. The arrangement may also be arranged to offer a user of the first unit the possibility of communicating with the receiver at the second unit, for instance for asking why the reading has been interrupted.

According to a further embodiment of the invention, said first means are arranged to provide a marking, which marks at least a position in the document displayed on said display member, and to move the marking in an automatic manner in the document displayed in order to call for reading of the document. Such a marking, which automatically moves over a text, facilitates to the reveiver to follow the text with his eyes. The receiver may thus to a larger extent concentrate on the content of the text and does not need to make any efforts for keeping an eye on where in the text he is located. By such a marking, the achievement of a significant increase of the reading speed ought to be possible. Advantageous embodiments of such a marking are described in the international PCT-application No. SE99/02479. Advantageously, said parameter includes the position of the marking in the document when the displaying of the document is interrupted. If the receiver has utilised the marking for reading the document a very good knowledge about how large part of the document which has really been read is thus obtained. It is also possible to let said parameter include the position of the marking in the document already when the movement of the marking is interrupted. The question mentioned above may for instance be initiated in an automatic manner by said first means when the reading is interrupted. Thereafter, a possible response to the question or establishment of a missing response may be communicated to the registering unit.

According to a further embodiment of the invention, said marking includes a forward limit of a part of the document which is disclosed on the display member, wherein said first means are arranged to move said limit in an automatic manner in order to control the reading of the document. Furthermore, said first means may be arranged to hide substantially completely an area of the document, which is located ahead of said limit and which can be displayed as a substantially empty surface. Such an empty or substantially blank surface without any signs or patterns does not mislead the eyes, but the reader may concentrate on the text. Advantageously, said first means may be arranged to permit a choice of colour of the substantially empty surface.

According to a further embodiment of the invention, said first means are arranged to control the movement of the marking in such a way that the movement appears as a substantially continuous movement at least along a portion cf the document. By such a uniform movement of the marking, the eyes of the reader may easily follow the text, i. e. the marking moves without jumping from sign to sign at a continuous speed over a text portion, for instance one text row, before the marking jumps to the next row. Furthermore, a control member may be provided, by means of which the speed with which the marking moves over the text is controllable. By such a control member, an individual adjustment of the movement speed of the marking is obtained. The receiver may also adjust the reading speed to different degrees of difficulty of the text which is read for the moment.

According to a further embodiment of the invention, the document includes a text, which is arranged with a number of rows and a number of words in each row, wherein said first means are arranged to control the movement of the marking from one row to another row. In such a way an automatic scrolling of the text is obtained and the receiver will in an easy manner find the proper position in the text for the continuing reading after a change of page, i. e. the marking will be located where the receiver is to start reading after a change of page.

According to a further embodiment of the invention, an initiating member is arranged to permit the receiver at said second unit to start and stop, respectively, the movement of said marking. In such a way, it is easy for the receiver to make a short break in the reading for any reason.

The registering unit may thereby be at least partly located at the first unit. The registering unit may also be at least partly located at the second unit, i. e. at the receiver, wherein the value of the registered parameter may be transferred to the first unit according to any plan or on request. Furthermore, the registering unit may at least partly be located at a third unit, which for instance includes a computer application with an URL (Uniform Resource Locator) or the like, for instance a www-address and which performs this registering for a plurality of first units, which are permanently or temporarily connected to such a third unit.

According to a further embodiment of the invention, the registering unit includes a storing medium and at least a computer program portion, which is arranged to co-operate with said first means in order to detect the value of said parameter and to communicate this value to said storing medium. The computer program portion may advantageously be located at the second unit at least when the document is displayed by the first unit. The computer program portion may thereby include a so-called distributed applet, a java-script or the like.

The object is also obtained by the method initially defined, which includes the steps of:
providing information in the form of a document via a first unit and said network,
receiving the document at a second unit,
displaying the document on a display member of the second unit,
controlling the displaying of the document in such a manner that a successive reading of the document is called for, and
registering the value of at least one parameter of said control in order to determine to which extent the document is read by a user at said second unit.

Advantageous embodiments of the method are defined in the dependent claims 18-21.

### BRIEF DESCRIPTION OF THE DRAWINGS

The present invention is now to be explained more closely by means of embodiments described by way of example and with reference to the drawings attached hereto.
- Fig 1: discloses schematically an arrangement for communication via Internet according to an embodiment of the invention.
- Fig 2: discloses schematically a unit for a receiver of the arrangement in Fig 1.

### DETAILED DESCRIPTION OF DIFFERENT EMBODIMENTS OF THE PRESENT INVENTION

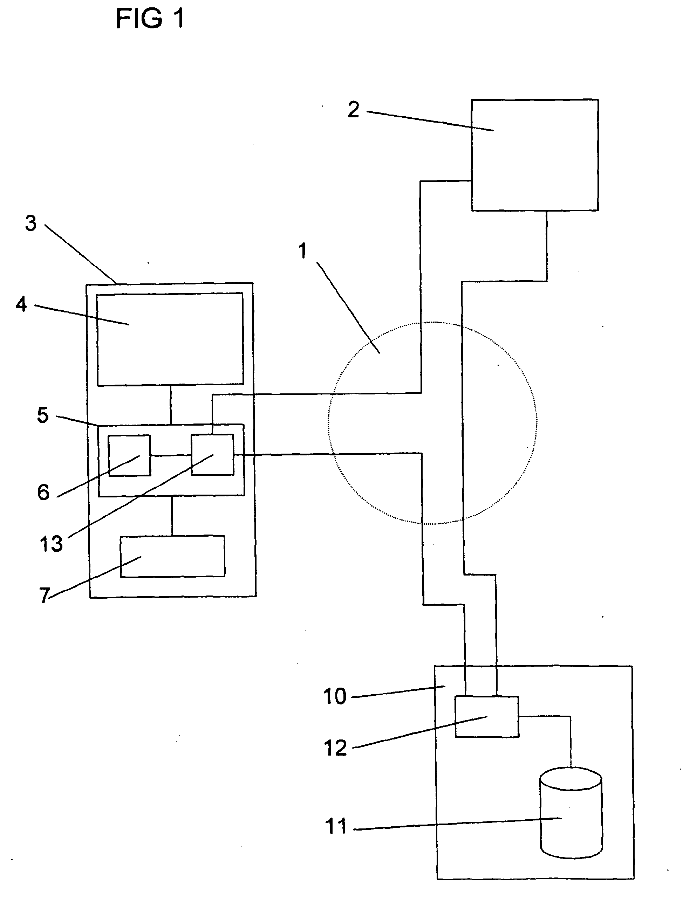

Fig 1 discloses an arrangement for communication via a network, which is illustrated schematically by the broken circle 1. The network 1 may be an arbitrary tele communication network, for instance a public network such as Internet, or an Intranet. In the following description, reference is made to Internet as the network 1.

The arrangement includes at least a first unit 2, which includes a computer or computer application arranged to provide different types of information and documents via the network 1, for instance a web page that is available via Internet.

The arrangement also includes at least a second unit 3, which also may include a computer or a computer application. In the embodiment disclosed, the second unit 3 is formed by a computer, which is connectable to Internet and which thus may visit the web page of the first unit 2. The computer of the second unit 3 includes in a conventional manner a display member 4 and a processing unit 5, which in reality may be formed by the processor of the second unit 3. The display member 4 is thus arranged to display, for instance, the web page of the first unit 2, wherein the processing unit 5 controls the displaying of the web page on the display member 4.

Furthermore, the process in unit 5 includes first means 6, which are arranged to control the displaying of a document on the display member 4 in such a way that successive reading of the document is called for. Such first means 6 may be realised by means of a computer program portion, which is stored in a memory member 7 of the computer 3. The memory member 7 illustrates in the embodiment disclosed the hard disc and the internal memory of the computer 3. When a document from the web page of the first unit 2 thus is disclosed on the display member 4, the program portions 6 may control the displaying in such a way that the document is fed successively in a proper speed for reading by a receiver of the information contained in the document. It is to be noted, that the program portion 6 also may be stored in the computer application of the first unit 2 and that required program routines of the program portion 6 are transferred to the second unit 3 together with the web page.

The arrangement also includes a registering unit 10, which in the embodiment disclosed, forms a third unit, which communicates with the first unit 2 and the second unit 3 via Internet 1. Also the registering unit 10 may be realised by a computer or a computer application. The registering unit 10 includes a storing medium, for instance a database 11 and a communication member 12. Furthermore, the registering unit 10 includes a computer program portion 13, which in the embodiment disclosed, is located at the processing unit 5 of the second unit 3. The computer program portion 13 may thereby be stored in the internal memory or on the hard disc of the memory member 7. The computer program portion 13 may be permanently or temporarily located at the second unit 3. The registering unit 10 is arranged to register the value of a parameter of the controlling of the displaying of a document on the display member 4. By means of the value of this parameter, it is possible to estimate or determine to which degree the document has been read by a receiver at the second unit 3. The parameter may thereby include how large part of the document has been displayed on the display member 4 when the displaying is interrupted. In such a case, the value of the parameter may thus be defined as for instance the number of signs or words disclosed in relation to the total number of signs or words, or as a percentage number, wherein this percentage number is stored in the database 11 of the registering unit 10. Moreover, it is to be noted that the parameter may include or be combined with other data, for instance demographic data.

Furthermore, the registering unit 10 may, via the communication member 12 and Internet, communicate with the first unit 2, wherein the first unit 2 may receive information about the registered value of the parameter. In such a way, the first unit 2 may obtain knowledge about how large part of a document has been displayed in connection with a visiting of the web page of the first unit 2. Consequently, a user at the first unit 2 may obtain knowledge about to which extent their web page is read by the visitors. It is to be noted, that the registering unit 10 also may be an integrated part of the first unit 2, i. e. the components and the software, forming the registering unit 10 may be included by the computer application of the first unit 2. Also in this case, the indicated program portion 13 may of course be completely or partly stored at the second unit 3. It is also perceivable to integrate the components and the software forming the registering unit 10 at the second unit 3. The arrangement disclosed may thus be configured in a large number of different manners within the scope of the invention. In this connection it is also pointed out that the arrangement may include a large number of second units 3. Principally, all functions required for enabling said registering may be located outside the second unit 3 and transferred to the second unit 3 merely in connection with the connection of the second unit 3 to the web page of the first unit 2. In such a way, principally all computers connected to Internet may form a respective second unit 3 of the arrangement according to the invention. In the same manner, the arrangement may include a plurality of first unit 2, which for instance utilises one and the same registering unit 10, which is arranged to provide the value of the parameter to all the first units 2, which want to be connected to the arrangement.

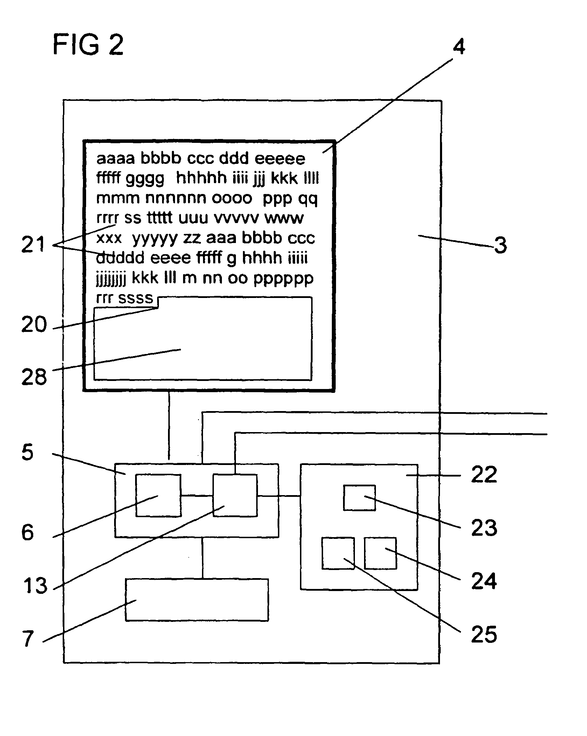

Furthermore, the program portion 6 may be arranged to provide a marking 20, see Fig 2, which is disclosed on the display member 4 and which marks at least a position in the document disclosed on the display member 4. The program portion 6 is furthermore arranged to move the marking 20 in an automatic way in the document disclosed in order to in such a way call for reading of the document. Consequently, the marking 20 moves along a text of the document, i.e. with a movement which extends substantially in parallel with a row 21 in order to control reading of the text. The marking 20 moves automatically, i.e. when the marking 20 has been initiated it is moved with a substantially uniform speed over the text which is stationary during a time period. When the marking 20 has reached the end of the part of the text shown on the display member 4, the text is moved in such a way that at least a partly other part of the text in the document is disclosed on the display member 4. The marking 20 will thereby move on the display member 4, for instance from the lower right corner to upper left corner, but maintain its position in relation to the text.

By such a marking 20, said parameter may advantageously include the position of the marking in the document when the displaying of the document on the display member 4 is interrupted. It is also possible to let said parameter include the position of the marking 20 in the document, or the text, when the movement of the marking 20 has been interrupted.

The first unit, which is disclosed more closely in Fig 2, includes also a control unit 22, which is connected to the processing unit 5 of the first unit 3 and which, for instance, may be realised by a keyboard of the computer of the first unit 3. It is to be noted, that the control unit 22, which is disclosed in Fig 2, merely is schematically disclosed and that different members for influencing the movement of the marking 20 may be designed in an arbitrary manner. The control unit 22 includes an initiating member 23, which is designed as a key and arranged to permit a user of the first unit 3 to start and stop, respectively, the movement of the marking 20 by a simple pushing. Furthermore, the control unit 22 includes a control member 24, 25, by means of which the movement speed of the marking 20 may be controlled. The control member 24, 25 includes a first key 24, by which the speed of the marking 20 can be increased by pushing the key 24, and a second key 25, by means of which the speed of the marking 20 may be reduced by pushing the key 25.

Fig 2 discloses the marking 20 in the form of a forward limit of the displayed part of the text. The limit is moved successively and substantially continuously in a forward direction in such a way that an ever growing part of the text is displayed on the display member 4. According to this embodiment, the marking 20 may also include an area 28, which is located ahead of the limit and which advantageously may extend to the end of the display member 4. The part of the text located ahead of the limit and thus within the area may thereby be substantially completely hidden to a user of the second unit 3. Possibly, the hidden area 28 may be made legible at a break in the reading of the text. The area 28 may be displayed as a substantially empty surface. It is also possible by means of the control unit 22 to select a suitable colour of the area 28 or the substantially empty surface. It is to be noted, that the border may be visible on the screen as, for instance, a vertical line. The limit may also be invisible in the sense that it is not marked but merely forms the transition to the area 28, as is disclosed in Fig 2.

The marking 20 may be designed in a large number of other manners, for instance as a dot located below a sign in the text, as a frame or a window, which surrounds a number of signs in the text and which extends in parallel with a row 21 of the text. Furthermore, the marking 20 may be designed in such a way that the signs to be marked are shown by extra bold type, in spaced-out letters, italics or the like. The marking 20 may also include a shadowing of an area within which the signs to marked are located. This shadowing may be made in a grey tone scale or in any suitable colour. The marking 20 may also be designed as a line, which is located above the signs to be marked or as a filled circle moving along the text.

The invention is applicable to all types of documents and texts, which are displayed on a computer and which are obtained via a network. Such documents may for instance be e-mail, web pages or other documents transferred via Internet or any other network. The second unit 3 may not only be realised by conventional computers but also by palm computers, mobile phones, especially so-called WAP-phones with larger possibilities to transfer text masses, etc.

The invention is not limited to the embodiments described but may be varied an modified within the scope of the following claims.

## Claims

1. An arrangement for communication, wherein the arrangement includes
a first unit (2) arranged to provide information in the form of a document,
at least one second unit (3) arranged to receive said information and including a display member (4), that is arranged to display the document to a receiver, and
a processing unit (5) arranged to control the displaying of the document, wherein the processing unit (5) includes first means (6) arranged to control the displaying in such a manner that a successive reading of the document is called for, wherein the arrangement refers to communication via a network (1), wherein the first unit (2) is arranged to provide said information via said network (1),
**characterised in**
**that** the arrangement includes a registering unit (10) arranged to register the value of at least one parameter of said control in order to determine how large part of the document has been displayed when the displaying is interrupted at said second unit, and
**that** the registering unit (10) is arranged to provide the value of said parameter to a user at the first unit (2).

2. An arrangement according to any one of claims 1 and 2, **characterised in that** said first means (6) are arranged to provide a marking (20), which marks at least one position in the document displayed on said display member (4), and to move the marking (20) in an automatic manner in the document displayed in order to call for reading of the document.

3. An arrangement according to claim 3, **characterised in that** said parameter includes the position of the marking (20) in the document when the displaying of the document is interrupted.

4. An arrangement according to claim 4, **characterised in that** said parameter includes the position of the marking (20) in the document when the movement of the marking is interrupted.

5. An arrangement according to any one of claims 4 and 5, **characterised in that** said first means (6) are arranged to initiate a question to the receiver of the first unit after said interruption and to communicate the result of the question to the registering unit (10).

6. An arrangement according to any one of claims 3 to 6, **characterised in that** said marking (20) includes a forward limit of a part of the document displayed on the display member (4), wherein said first means (6) are arranged to move said limit in an automatic manner in order to control the reading of the document.

7. An arrangement according to claim 7, **characterised in that** said first means (6) are arranged to hide substantially completely an area (28) of the document, which is located ahead of said limit.

8. An arrangement according to claim 8, **characterised in that** said first means (6) are arranged to display the area (28) as a substantially empty surface.

9. An arrangement according to claim 9, **characterised in that** said first means (6) are arranged to permit a choice of colour of the substantially empty surface.

10. An arrangement according to any one of claims 3 to 10, **characterised in that** said first means (6) are arranged to control the movement of the marking (20) in such a manner that the movement appears as a substantially continuous movement along at least a portion of the document.

11. An arrangement according to any one of claims 3 to 11, **characterised by** a control member (24, 25) by means of which the speed with which the marking is moving over the document is controllable.

12. An arrangement according to any one of claims 3 to 12, **characterised in that** the document includes a text, which is arranged with a number of rows (21) and a number of words in each row, wherein said first means are arranged to control the movement of the marking (20) from one row (21) to another row (21).

13. An arrangement according to any one of the preceding claims, **characterised by** an initiating member (23), which is arranged to permit the receiver at said second unit to start and stop, respectively, the movement of said marking (20).

14. An arrangement according to any one of the preceding claims, **characterised in that** the registering unit (10) includes a storing medium (11) and at least a computer program portion (13), which is arranged to co-operate with said first means in order to detect the value of said parameter and to communicate this value to said storing medium (11).

15. An arrangement according to claim 15, **characterised in that** the computer program portion (13 is located at the second unit (3).

16. A method for communication via a network (1), wherein the method includes the steps of:
providing information in the form of a document via a first unit (2) and said network (1),
receiving the document at a second unit (3),
displaying the document on a display member (4) of the second unit (3),
controlling the displaying of the document in such a manner that a successive reading of the document is called for, and
registering the value of at least one parameter of said control in order to determine how large part of the document has been displayed when the displaying is interrupted at said second unit (3), and
providing the value of said parameter to a user at the first unit (2).

17. A method according to claim 16, including the step of:
providing a marking (20), which marks at least a position in the
document displayed on said display member (4), and
moving the marking (20) in an automatic manner in the document displayed in order to call for reading of the document.

18. A method according to claim 17, wherein said parameter includes the position of the marking (20) in the document when the displaying of the document is interrupted.

19. A method according to claim 18, wherein said parameter includes the position of the marking (20) in the document when the movement of the marking is interrupted.

## Patentansprüche

1. Anordnung zur Kommunikation, wobei die Anordnung Folgendes umfasst:
eine erste Einheit (2), welche zur Bereitstellung von Informationen in der Form eines Dokumentes angeordnet ist;
zumindest eine zweite Einheit (3), welche zum Empfang dieser Informationen angeordnet ist und ein Anzeigeglied (4) aufweist, das zur Anzeige des Dokumentes für einen Empfänger angeordnet ist; und
eine Verarbeitungseinheit (5), welche zur Steuerung des Anzeigens des Dokumentes angeordnet ist, wobei die Verarbeitungseinheit (5) erste Mittel (6) aufweist, die zur Steuerung des Anzeigens in einer solchen Weise angeordnet sind, dass ein aufeinanderfolgendes Lesen des Dokumentes ermöglicht ist, wobei sich die Anordnung auf eine Kommunikation über ein Netzwerk (1) bezieht, wobei die erste Einheit (2) zur Bereitstellung dieser Informationen über das Netzwerk (1) angeordnet ist,
**dadurch gekennzeichnet,**
**dass** die Anordnung eine Registriereinheit (10) aufweist, welche zur Registrierung des Wertes zumindest eines Parameters der Steuerung angeordnet ist, um in der zweiten Einheit festzulegen, wie groß der Teil des Dokumentes ist, der angezeigt worden ist, wenn das Anzeigen unterbrochen wird, und
**dass** die Registriereinheit (10) zur Bereitstellung des Wertes des Parameters an einen Benutzer der ersten Einheit (2) angeordnet ist.

2. Anordnung nach Anspruch 2, **dadurch gekennzeichnet, dass** die ersten Mittel (6) zur Bereitstellung einer Markierung (20), welche zumindest eine Position in dem auf dem Anzeigeglied (4) angezeigten Dokument markiert, und zur Verschiebung der Markierung (20) auf automatische Art und Weise in dem angezeigten Dokument angeordnet sind, um ein Lesen des Dokumentes zu ermöglichen.

3. Anordnung nach Anspruch 2, **dadurch gekennzeichnet, dass** der Parameter die Position der Markierung (20) in dem Dokument aufweist, wenn das Anzeigen des Dokumentes unterbrochen wird.

4. Anordnung nach Anspruch 3, **dadurch gekennzeichnet, dass** der Parameter die Position der Markierung (20) in dem Dokument aufweist, wenn die Verschiebung der Markierung unterbrochen wird.

5. Anordnung nach einem der Ansprüche 3 und 4, **dadurch gekennzeichnet, dass** die ersten Mittel (6) zur Auslösung einer Anfrage an den Empfänger der ersten Einheit nach der Unterbrechung und zur Übertragung des Ergebnisses der Anfrage an die Registriereinheit (10) angeordnet sind.

6. Anordnung nach einem der Ansprüche 2 bis 5, **dadurch gekennzeichnet, dass** die Markierung (20) eine vordere Grenze eines Teils des auf dem Anzeigeglied (4) angezeigten Dokumentes aufweist, wobei die ersten Mittel (6) zur Verschiebung der Grenze auf automatische Art und Weise angeordnet sind, um das Lesen des Dokumentes zu steuern.

7. Anordnung nach Anspruch 6, **dadurch gekennzeichnet, dass** die ersten Mittel (6) dazu angeordnet sind, einen Bereich (28) des Dokumentes, welcher sich vor der Grenze befindet, im Wesentlichen vollständig zu verbergen.

8. Anordnung nach Anspruch 7, **dadurch gekennzeichnet, dass** die ersten Mittel (6) zur Anzeige des Bereichs (28) als eine im Wesentlichen leere Oberfläche angeordnet sind.

9. Anordnung nach Anspruch 8, **dadurch gekennzeichnet, dass** die ersten Mittel (6) zur Ermöglichung einer Auswahl einer Farbe der im Wesentlichen leeren Oberfläche angeordnet sind.

10. Anordnung nach einem der Ansprüche 2 bis 9, **dadurch gekennzeichnet, dass** die ersten Mittel (6) zur Steuerung der Verschiebung der Markierung (20) in einer solchen Art und Weise angeordnet sind, dass die Verschiebung als eine im Wesentlichen kontinuierliche Verschiebung längs zumindest eines Abschnitts des Dokumentes erscheint.

11. Anordnung nach einem der Ansprüche 2 bis 10, **gekennzeichnet durch** ein Steuerglied (24, 25), mittels dessen die Geschwindigkeit, mit welcher sich die Markierung über das Dokument verschiebt, steuerbar ist.

12. Anordnung nach einem der Ansprüche 2 bis 11, **dadurch gekennzeichnet, dass** das Dokument einen Text aufweist, welcher mit einer Anzahl von Zeilen (21) und einer Anzahl von Worten in jeder Reihe angeordnet ist, wobei die ersten Mittel zur Steuerung der Verschiebung der Markierung (20) von einer Reihe (21) zu einer anderen Reihe (21) angeordnet sind.

13. Anordnung nach einem der vorhergehenden Ansprüche, **gekennzeichnet durch** ein Auslöseglied (23), welches dazu angeordnet ist, dem Empfänger in der zweiten Einheit jeweils ein Beginnen und ein Anhalten der Verschiebung der Markierung (20) zu gestatten.

14. Anordnung nach einem der vorhergehenden Ansprüche, **dadurch gekennzeichnet, dass** die Registriereinheit (10) ein Speichermedium (11) und zumindest einen Computerprogrammabschnitt (13) aufweist, welcher zur Zusammenwirkung mit den ersten Mitteln zur Erfassung des Wertes des Parameters und zur Übertragung dieses Wertes an das Speichermedium (11) angeordnet ist.

15. Anordnung nach Anspruch 14, **dadurch gekennzeichnet, dass** der Computerprogrammabschnitt (13) in der zweiten Einheit (3) angeordnet ist.

16. Verfahren zur Kommunikation über ein Netzwerk (1), wobei das Verfahren die Verfahrensschritte umfasst:
Bereitstellen von Informationen in der Form eines Dokumentes über eine ersten Einheit (2) und das Netzwerk (1);
Empfangen des Dokumentes in einer zweiten Einheit (3);
Anzeigen des Dokumentes auf einem Anzeigeglied (4) der zweiten Einheit (3); Steuern des Anzeigens des Dokumentes auf eine solche Art und Weise, dass ein aufeinanderfolgendes Lesen des Dokumentes ermöglicht ist; und
Registrieren des Wertes zumindest eines Parameters des Steuerns, um in der zweiten Einheit festzulegen, wie groß der Teil des Dokumentes ist, der angezeigt worden ist, wenn das Anzeigen unterbrochen wird; und
Bereitstellen des Wertes des Parameters an einen Benutzer der ersten Einheit (2)

17. Verfahren nach Anspruch 16, welches die Verfahrensschritte aufweist:
Bereitstellen einer Markierung (20), welche zumindest eine Position in dem auf dem Anzeigeglied (4) angezeigten Dokument markiert; und
Verschieben der Markierung (20) in dem Dokument auf automatische Art und Weise, um ein Lesen des Dokumentes zu ermöglichen.

18. Verfahren nach Anspruch 17, wobei der Parameter die Position der Markierung (20) in dem Dokument aufweist, wenn das Anzeigen des Dokumentes unterbrochen wird.

19. Verfahren nach Anspruch 18, wobei der Parameter die Position der Markierung (20) in dem Dokument aufweist, wenn das Verschieben des Dokumentes unterbrochen wird.

## Revendications

1. Dispositif de communication, ce dispositif comprenant :
une première unité (2) conçue pour fournir des informations sous la forme d'un document,
au moins une seconde unité (3) conçue pour recevoir lesdites informations et comprenant un élément d'affichage (4) conçu pour afficher le document sur un récepteur et
une unité de traitement (5) conçue pour contrôler l'affichage du document, l'unité de traitement (5) comprenant des premiers moyens (6) conçus pour contrôler l'affichage de façon à ce qu'une lecture successive du document soit demandée, dans lequel,
le dispositif effectue une communication via un réseau (1), la première unité (2) étant conçue pour fournir lesdites informations via ledit réseau (1),
**caractérisé en ce que** le dispositif comprend une unité d'enregistrement (10) conçue pour enregistrer la valeur d'au moins un paramètre dudit contrôle afin de déterminer la taille de la partie du document qui a été affichée au niveau de la seconde unité lorsque l'affichage est interrompu et **en ce que** l'unité d'enregistrement (10) est conçue pour fournir la valeur dudit paramètre à un utilisateur au niveau de la première unité (2).

2. Dispositif selon la revendication 1, **caractérisé en ce que** lesdits premiers moyens (6) sont conçus pour effectuer un marquage (20) qui identifie au moins une position dans le document affiché sur ledit élément d'affichage (4) et pour déplacer le marquage (20) de manière automatique dans le document affiché afin de demander la lecture du document.

3. Dispositif selon la revendication 2, **caractérisé en ce que** ledit paramètre comprend la position du marquage (20) dans le document lorsque l'affichage du document est interrompu.

4. Dispositif selon la revendication 3, **caractérisé en ce que** ledit paramètre comprend la position du marquage (20) dans le document lorsque le mouvement du marquage est interrompu.

5. Dispositif selon la revendication 4, **caractérisé en ce que** lesdits premiers moyens (6) sont conçus pour envoyer une question au récepteur de la première unité après ladite interruption et pour communiquer le résultat de la question à l'unité d'enregistrement (10).

6. Dispositif selon l'une des revendications 3 à 5, **caractérisé en ce que** ledit marquage (20) comprend une limite de déplacement vers l'avant du document affiché sur l'élément d'affichage (4), lesdits premiers moyens (6) étant conçus pour déplacer ladite limite de manière automatique afin de contrôler la lecture du document.

7. Dispositif selon la revendication 6, **caractérisé en ce que** lesdits premiers moyens (6) sont conçus pour dissimuler sensiblement entièrement une zone (28) du document située au-delà de ladite limite.

8. Dispositif selon la revendication 7, **caractérisé en ce que** lesdits premiers moyens (6) sont conçus pour afficher la zone (28) en tant que surface sensiblement vide,

9. Dispositif selon la revendication 8, **caractérisé en ce que** lesdits premiers moyens (6) sont conçus pour permettre un choix de couleur de la surface sensiblement vide.

10. Dispositif selon l'une des revendications 3 à 9, **caractérisé en ce que** lesdits premiers moyens (6) sont conçus pour contrôler le mouvement du marquage (20) de façon à ce que le mouvement ressemble à un mouvement sensiblement continu le long d'au moins une portion du document.

11. Dispositif selon l'une des revendications 3 à 10, **caractérisé par** un élément de contrôle (24, 25) à l'aide duquel la vitesse avec laquelle le marquage se déplace peut être contrôlée.

12. Dispositif selon l'une des revendications 3 à 11, **caractérisé en ce que** le document comprend un texte comprenant plusieurs lignes (21) et plusieurs mots sur chaque ligne, lesdits premiers moyens étant conçus pour contrôler le mouvement du marquage (20) d'une ligne (21) vers une autre ligne (21).

13. Dispositif selon l'une des revendications précédentes, **caractérisé par** un élément initiateur (23) conçu pour permettre au récepteur de ladite seconde unité de démarrer et d'arrêter le mouvement dudit marquage (20).

14. Dispositif selon l'une des revendications précédentes, **caractérisé en ce que** l'unité d'enregistrement (10) comprend un support de stockage (11) et au moins une portion de programme informatique (13), conçus pour interagir avec lesdits premier moyens afin de détecter la valeur dudit paramètre et de communiquer cette valeur audit support de stockage (11).

15. Dispositif selon la revendication 14, **caractérisé en ce que** la portion de programme informatique (13) se trouve au niveau de la seconde unité (3).

16. Procédé de communication via un réseau (1), ce procédé comprenant les étapes suivantes :
envoi d'informations sous la forme d'un document via une première unité (2) et via ledit réseau (1),
réception du document au niveau d'une seconde unité (3),
affichage du document sur un élément d'affichage (4) de la seconde unité (3),
contrôle de l'affichage du document de façon à ce qu'une lecture successive du document soit demandée et enregistrement de la valeur d'au moins un paramètre dudit contrôle afin de déterminer la taille de la partie du document qui a été affichée au niveau de la seconde unité (3) lorsque l'affichage est interrompu, et
envoi de la valeur dudit paramètre à un utilisateur au niveau de la première unité (2).

17. Procédé selon la revendication 16, comprenant les étapes suivantes :
réalisation d'un marquage (20) identifiant au moins une position dans le document affiché sur ledit élément d'affichage (4), et
déplacement du marquage (20) de manière automatique dans le document affiché afin de demander la lecture du document.

18. Procédé selon la revendication 17, dans lequel ledit paramètre comprend la position du marquage (20) dans le document lorsque l'affichage du document est interrompu.

19. Procédé selon la revendication 18, dans lequel ledit paramètre comprend la position du marquage (20) dans le document lorsque le mouvement du marquage est interrompu.
